**Europäisches Patentamt**

**European Patent Office**

**Office européen des brevets**

(11) Publication number: **0 266 432 B1**

# EUROPEAN PATENT SPECIFICATION

(45) Date of publication of patent specification :
**15.01.92 Bulletin 92/03**

(51) Int. Cl.⁵ : **G01N 27/30**

(21) Application number : **87902741.5**

(22) Date of filing : **21.04.87**

(86) International application number :
**PCT/JP87/00252**

(87) International publication number :
**WO 87/06701 05.11.87 Gazette 87/24**

(54) **MICROELECTRODE FOR ELECTROCHEMICAL ANALYSIS.**

(30) Priority : **22.04.86 JP 92676/86**

(43) Date of publication of application :
**11.05.88 Bulletin 88/19**

(45) Publication of the grant of the patent :
**15.01.92 Bulletin 92/03**

(84) Designated Contracting States :
**CH DE FR GB LI SE**

(56) References cited :
**EP-A- 0 197 747**
**JP-A- 617 463**
**JP-A- 6 052 759**
**JP-A- 6 077 984**
**US-A- 4 431 508**
**US-A- 4 439 303**
**US-A- 4 561 963**

(73) Proprietor : **TORAY INDUSTRIES, INC.**
**2-1, Nihonbashi Muromachi 2-chome Chuo-ku**
**Tokyo 103 (JP)**

(72) Inventor : **MORITA, Kenichi**
**3-12-5, Kataseyama Fujisawa-shi**
**Kanagawa-ken 251 (JP)**
Inventor : **SHIMIZU, Yoshihiro**
**1111, Tebiro Kamakura-shi**
**Kanagawa-ken 248 (JP)**

(74) Representative : **Kador & Partner**
**Corneliusstrasse 15**
**W-8000 München 5 (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

TECHNICAL FIELD

This invention relates to the improved minute electrode such as dissolved oxygen measuring electrode, ion concentration measuring electrode, for bio-sensors and for reference electrode which has low flow sensitivity and also it protects from contamination.

BACKGROUND ART

The analysis of oxygen, saccharide, amino acid, pH etc. has hitherto done by electrochemical method, using several kinds of electrodes. Following is the explanation of prior technique for various kinds of electrodes and sensors.

(1) The sensor for measuring the concentration of the dissolved oxygen

It is important to measure the concentration of the dissolved oxygen in the body fluid such as blood, or that of culture fluid in a fermenter jar. Clark type oxygen sensor has been used widely. The composition of this sensor is as follows.

The container of sensor is filled by electrolyte such as caustic alkaline solution etc., and the cathode (for example made of platinum) and the anode (for example made of lead etc.) are set therein, and separated from outside (the solution which should be measured) by the gas permeable membrane made of polytetrafluoro ethylene etc.. The concentration of oxygen can be determined by measuring the electric current between two electrodes, whereas oxygen molecule passes from test solution to inside of the sensor container through selective permeable membrane, and it is reduced electrochemically on platinum electrode surface. By the appearance of this method, amount of oxygen can be determined easily, but there are still following problems. That is, instability for pressure at sterilization, difficulty for maintenance, limitation for miniaturization, and it can't determine the real dissolved oxygen concentration, but partial oxygen pressure, it can't determine the dissolved oxygen concentration in fermentation under pressure or can't determine it on the bottom of the sea and the lakes, and the variation of the electric current is rather big in accordance with temperature change.

Following methods are proposed for other oxygen concentration measuring electrodes, especially for body fluids. That is, the method to make the condition of stable contact by means of covering the fine metal wire electrode surface with porous materials consisted of many layers (see JP-A-57117838). And the method to insert the fine metal wire electrode into the opened tube in the recessed position from the tip of the said electrode (see JP-A-57195436).

However, these methods have still following problems such as contamination of the electrode and the possibility to suffer from iatrogenic disease by peeling off the porour membrane.

(2) The sensor for measuring the concentration of ions

The glass electrode has been widely used for measuring the concentration of hydrogen ion. However, it has following several problens. That is, it is easy to break, also it is easy to contaminate, and it has the limitation using in the alkali aqueous solution. Moreover, it is very difficult to miniaturize, whereas the glass electrode needs the inside standard solution compartment. And there is a possibility that inside standared solution flows out.

Recently, following phenomena is discovered. The membrane which is deposited by means of electrochemical polymerization on the surface of the electrode, causes the change in potential in accordance with bonding or removing of the hydrogen ion. [William R. Heineman, Anal. Chem. 52, 345 (1980)] The following pH sensor is also proposed. The method has applied following phenomena that the membrane, which is formed on the surface of an electrode, causes reversible oxidation/reduction reaction with bonding or removing of hydrogen ion (see JP-A-61019434). However, when these pH sensors are used continuously in the body fluids or fermentative solution, the potential drift is occured in accordance with contamination.

(3) Bio-sensor

There are two types of bio-sensors. That is, the first one is to determine the concentration of materials related to biochemical reaction, by measuring the current which caused in electrochemical reaction of said materials.

The another one is to analyse the electroactive materials (related to biochemical reaction), by measuring the potential of the membrane which selectively responds to said materials. The former one is called "Amperometry method" and in this case, oxygen sensor and hydrogen peroxide electrode are applied. On the other hand, the latter one is called "Potentiometry type" and ion selective electrode and ammonia or carbon dioxide gas electrode (which consists of some kind of gas permeable membrane and pH electrode) are applied.

Enzyme, microorganism, and antigen antibody reaction are one of the biochemical reactions. The bio-sensor has problems said hereinbefore, whereas fundamental composition of bio-sensor is oxygen sensor of pH electrode.

US-A-4 439 303 describes an electrode for use in electrochemical reactions such as electrochemical stripping analysis comprising a plurality of parallel oriented and elongated carbon or graphite fibers which are separated and held in a core by electrically insulating bonding material which completely files the lateral spaces between the fibers.)

(4) The reference electrode

Conventional reference electrode has following problems; 1) it is easy to break, 2) it is hard to ensure for the pressure of sterilization, whereas the saturated calomel electrode and silver/silver chloride electrode etc. includes inside-solution.

Therefore, the object of the present invention is to provide the various type of electrodes and also sensors which can determine for example, the dissolved oxygen, saccharide, amino acid, pH etc. stably and accurately without disadvantage of prior techniques.

DISCLOSURE OF THE INVENTION

According to the present invention a micro-electrode for electrochemical analysis comprises a bundle of parallel carbon fibers set in a matrix of nonconducting resin, the electrode terminating in a working face formed transverse to the axis of the bundle, characterised in that the fibers are recessed from the face and communicate therewith through voids in the matrix which are coaxial with each fiber.

The electrode which has low flow sensitivity and protects from electrode contamination by interference substances can be obtained in accordance with this composition.

BRIEF DESCRIPTION OF THE DRAWINGS

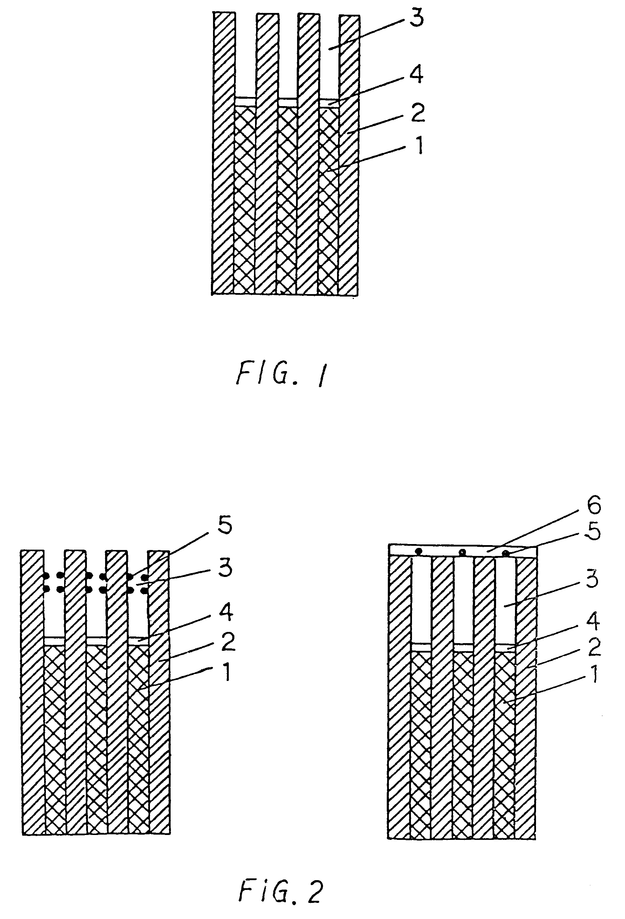

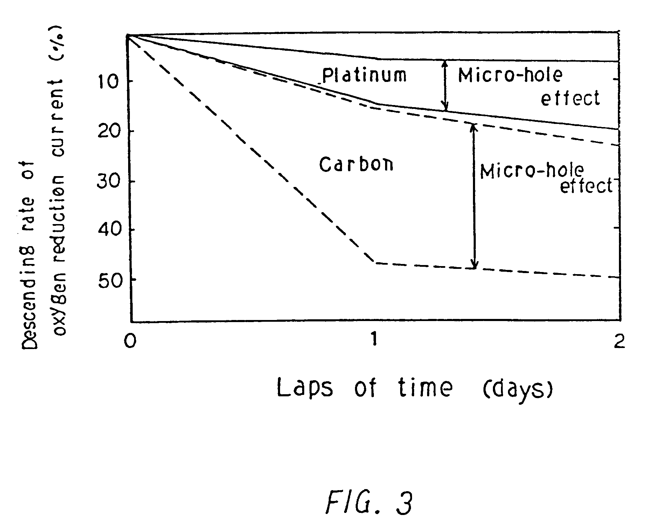

The FIG. 1 shows the conceptual illustration of minute electrode of present invention, and FIG. 2 shows the conceptual illustration of the electrode for bio-sensor which is one of the definite application of this invention. The FIG. 3 shows the contamination by interference substances of each electrode which has micro-holes, and which has not, this has been carried out in Example 4.

BEST MODE FOR CARRYING OUT THE INVENTION

Conceptually, the minute electrode of this invention is shown in FIG. 1. The bundle of carbon fibers consist of plural carbon fibers 1 and nonconducting resin 2. In the same FIG. 1, the top of carbon fiber 1 is recessed from the top of nonconducting resin 2 and forms the micro-hole 3 which is released outside. And the bottom of this micro-hole which is the top part of carbon fiber becomes the electrode surface. If desired, surface of the electrode may be modified by electrocatalyst 4 for electrochemical reactions. This electrode is hereinafter refered to as "basic electrode".

Though there is no limitation for carbon fibers which forms the basic electrode, following carbon fibers such as polyacrylonitrile based, pitch based, rayon based, phenol resin based etc. and also the one which is produced by vapour deposition method, is used preferably.

The nonconducting material is preferably selected from fluorinated resin, polyester resin, epoxy resin, polyphenyleneoxide resin, polyphenylenesulfide resin, urethan resin, silicon resin, vinylchloride resin, phenol resin etc.. When the minute electrode is used in the living body, high quality anti-thrombgenesity resin is most preferable.

The plural carbon fibers are covered with nonconducting resin, and it is subjected to heat-set process in order to be one body. The cross-section of that (body) is like islands (each carbon fiber) in the sea (the nonconducting resin). Namely, carbon fibers do not contact with each other. The number of the carbon fibers is usually in the range of from 50 to 50,000, and it is selected on purpose for use. And when this electrode is used as reference electrode, sometimes more than 50,000 of carbon fibers may be used.

Generally, the ratio of the carbon fiber's area in the cross-section of this electrode is in the range of from 3 to 60%. The diameter of the carbon fiber is less than 20 μm, and more preferably it is less than 10 μm. The diameter of carbon fiber is that of micro-hole and in case of less than 20 μm, it causes so called "filter effect".

Generally, the depth of the micro-hole is in the range of from 0.5 to 500 μm, and more preferably it is in the range of from 20 to 400 μm. It is no problem, for example, if it is sharp like a pencil or in opposition it is hollowed. But in this case, the depth of the micro-hole is defined by the deepest part of it.

If desired, the surface of the electrode is coated with electrocatalyst. And that material may be selected from platinum, silver, gold, iridium, phthalocyanine and its derivatives etc.. The ability of oxygen reduction catalysis becomes higher in accordance with making this layer.

The basic electrode in this invention keeps more toughly from contamination by means of covering electrode surface with selective permeable membrane. It is desirable that this membrane is a polymer made by electrochemical polymerization.

For example, the basic electrode in this invention can be obtained by the following procedure.

At first, the bundle of the carbon fiber is impregnated with nonconducting resin which includes hardening agent, then the bundle is subjected to heat treatment process in order to harden the resin. In this way, wire like carbon fiber bundle which is covered with nonconducting resin is obtained. Then the carbon fiber bundle is cut for desired length, then one end of this bundle is burnished, and the lead wire is bonded by using silver paste to the other end. On the burnished side of the bundle, the micro-holes are formed by etching the carbon fibers by means of electrochemical oxidation which illustrates hereinafter.

Electrolytic solution may be selected from acid or alkaline solution, and alcohols such as methanol which includes supporting electrolyte. Then the anodic oxidation is done. In this process, the carbon fiber is connected to the anode, and the metal electrode is used as a counter electrode. The oxidation voltage is preferably in the range of from 1 to 100 volt. Also it is preferable method that the oxidation and reduction are repeated by turns.

When the surface of the electrode is coated with the electrocatalyst, following method such as plating, vacuum evaporation, sputtering etc. is applicable.

Including the basic electrode and also for other electrodes, the micro-hole may be filled up with gelatinoid material. Gelatinoid materials may be selected from agar, gelatin, polyacrylamide gel etc..

Various electrodes of the present invention are illustrated below more concretely.

(1) The electrode for measuring the concentration of dissolved oxygen.

Basic electrode itself may be applied as the electrode for measuring the concentration of dissolved oxygen. But more preferably, the surface of the basic electrode is coated with selective permeable membrane by electrochemical polymerization process. The best method of electrochemical polymerization is as follows. The supporting electrolyte such as sodium perchlorate, sodium sulfate is dissolved in the organic solvent such as acetonitrile etc. or water, and the monomer compound which should be electrochemically polymerized is added in it and then this mixed material is electrochemically polymerized at constant potential of 1 to 1.5 volt. There is no limitation, if the polymer doesn't have electroactivity and also it is the selective permeable membrane which protects from contamination. Monomer compound usable for present invention is selected from amino-containing aromatic compound or hydroxy aromatic compound for example, 4,4'-diaminodiphenylether, 4,4'-diaminodiphenylsulfide, phenol, aniline, or phenol derivatives, aniline derivatives. In accordance with polymerization conditions, the electroactive membrane will be formed. For example, when aniline is used as monomer, alkaline or neutral condition should be adopted, otherwise the membrane has electroactivity.

Repeating polymerization is preferable, whereas it makes the membrane coating complete and also makes the selective permeability higher.

When the oxygen sensor is made by using said electrode, silver/silver chloride is combined as counter electrode. This electrode may be applicable not only for measuring the dissolved oxygen but also for that of other electrochemical reactant materials, by means of changing the selective permeability.

(2) The ion electrode

The ion electrode is covered with the membrane, which is electrochemically deposited on the basic electrode and responds to hydrogen ion. Hydrogen ion responsable membranes are electropolymerized membranes such as 2,6-dimethylphenol, 4,4'-biphenol, 1,2-diaminobenzen, 1-aminopyrene, 1,8-diaminonaphthalene, 1,5-diaminonaphthalene etc..

In order to measure the concentration of hydrogen ion, this electrode is dipped together with reference electrode such as the saturated calomel electrode into the solution, and the voltage between two electrodes is measured.

4

(3) Bio-sensor

FIG. 2 shows the electrode for bio-sensor. The said electrode is covered with membrane 6, in which enzyme or microorganism 5 is immobilized.

Or those are immobilized on the inside surface of microholes 2.

In the case of potentiometry method, enzyme is selected from urease, penicillinase, glucoseoxidase, lipase etc.. And in the case of amperometry method, that is selected from glucoseoxidase, latic acid oxidase, L-aminooxidase, xanthionoxidase, uric acid oxidase, pyruvate oxidase, lactate oxidase etc. each kind of oxidasic enzyme.

Immobilized membrane 6 is selected from polyvinyl chloride, polyacrylamide, acetylcellulose, cellulose triacetate, cross linked polyvinylalcohol etc. Not only membrane but also fiber mass of nylon or its mesh may be applicable.

Enzyme or microorganism is immobilized with membrane by means of adsorption or inclusion, or making the covalent linkage, or making the cross link by gultaraldehyde.

In the case the enzyme or microorganism is immobilized onto the inside surface of the micro-hole of nonconducting materials, the enzyme is bonded to the functional group(amino group, for example) of the epoxy resin. In order to make bio-sensor, enzyme immobilized electrode and the counter electrode of silver/silver chloride are combined.

(4) Reference electrode

In the case of the reference electrode, silver and silver halide are deposited on the basic electrode surface. Chlorine and bromine are preferable as halogen. More preferably micro-holes are filled with gelatinoid material, as mentioned hereinbefore. And it is most preferable that the salt with halogen ion can be included in the gelatinoid material. Examples of the present invention and comparative examples are illustrated below.

Example 1, 2, 3 and Comparative Example 1

The bundle of one thousand of carbon fibers ("Torayca T-300 1K", having the diameter of 7 $\mu$m) was impregnated with the epoxy resin including the hardening agent. This impregnated bundle of fibers was hardened after heating under being stretched, so the composite material like a wire having diameter about 0.3 mm was obtained. After the side face of this wire was insulated by epoxy resin completely, it was cut. And the one cross sectional face was burnished by the conventional method, and another end was bonded to the lead wire by silver paste, then the electrode was made.

This burnished part was dipped in the sulfuric acid aqueous solution (2 mM) and by using the platinum wire as the counter electrode anodic oxidation was executed on the condition described bellow. The dependence of the flow rate of solution on the current of oxygen reduction was investigated using obtained sensor. Namely, the beaker with magnetic stirrer was filled by a saline, and the above-mentioned sensor was used as the working electrode and the silver/silver chloride was used as the counter electrode, then the solution was contacted with air at the room temperature to be saturated with air.

The negative voltage of 0.6 volt (vs Ag/AgCl) was applied at the working electrode, and the flowing cathodic current was measured. The current was measured respectively when the magnetic stirrer was revolved as fast as it could be and when it was stopped and the ratio was obtained.

In Example 1 operations to oxidize at 1.75 volt for 15 minutes, then to reduce at -1.2 volt for 1 minute, were repeated thirty-five times.

In Example 2 after oxidizing at 0.03 mA for 80 minutes reduced at -0.7 volt for 10 minutes in a saline.

In Example 3 after oxidizing at 0.5 mA for 9 minutes reduced at -0.6 volt for 10 minutes.

The depth of the micro-hole in each electrode was 120 $\mu$m in Example 1, 150 $\mu$m in Example 2, 240 $\mu$m in Example 3.

The measured value as using the electrode before anodically etching treatment as Comparative Example was shown.

The result is shown in Table 1.

## TABLE 1

| | the value of current when the solution flows devided by current when the solution stops |
|---|---|
| Example 1 | 1.40 |
| Example 2 | 1.36 |
| Example 3 | 1.32 |
| Comparative Example 1 | 6.02 |

Example 4

By using the bundle of one thousand of carbon fibers ("Torayca T-300", having the diameter of 7μm), the composite material like a wire with diameter of about 0.3 mm was obtained by means of same procedure as those described in Example 1.

This wire was cut and the one side was burnished by means of conventional method, another end was bonded to the lead wire by silver paste. The burnished part was dipped in the sulfuric acid aqueous solution (2 mM) using the platinum wire as the counter electrode and it was oxidized electrochemically at 0.5 mA for 9 minutes and then reduced at -0.6 volt for 20 minutes.

On the observation by scanning electron microscope (SEM), the depth of the etched part of carbon fibers was about 100 μm, and the surface of the electrode was sharp like a pencil.

The thin layer of platinum was made on the above-stated micro-hole electrode by the method which is explained hereinafter. Namely, the micro-hole electrode was dipped in the aqueous solution containing chloro-platinic acid (0.037 mol./$\ell$), ammonium phosphate (0.134mol./$\ell$) and sodium phosphate (0.704mol./$\ell$), and the current was run to the amount of 8 mC using platinum as the counter electrode. Then the electrode obtained was well washed with deionized water. On the observation by SEM, the platinum thin layer of about 0.6 μm adhered on the electrode unifomly.

The FIG. 3 showed that the progress of the electrode contamination when electrode after plating with platinum (represents "Platinum" in the FIG.) and electrode before plating with platinum (represents "Carbon" in the FIG.) were left in the LB culture composition (37°C).

The carbon electrode was shown by dotted line and the platinum electrode was shown by solid line. The each lower line showed the value that the electrode didn't have micro-hole and upper line showed the value that the electrode had micro-holes, the depth of which was about 100 μm. In each case, the descending rate of oxygen reduction current was low in case of having micro-hole (micro-hole effect). It is supposed that the micro-hole has effect of the filter which makes the electrode contaminant difficult to pass.

About the above-mentioned electrode which was plated with platinum, the descent of oxygen reduction current was about 5% till 24 hours later, then it was constant.

The thin membrane of polyaniline was electrochemically deposited on the above-mentioned electrode plated with platinum.

Namely the micro-hole electrode was dipped in the acetonitrile solution containing aniline (0.01mol./$\ell$), sodium perchlorate (0.1mol./$\ell$) and pyridine (0.02mol./$\ell$), then the polymerization was done untill the current couldn't run at 1.2 volt (vs.SCE). On the observation by SEM, it was certified that the thin polymer membrane was formed on platinum.

When that electrode obtained was left in the LB culture composition at 37 C for 10 days, after the sterilizations (120°C, for 20 minutes), the descent of the value of oxygen reduction current wasn't observed at all.

And there was no trouble even the sterilization was repeated 10 times.

Example 5

The same electrode as of Example 1 was made except that the diameter of the carbon fiber was 5 μm.

The burnished part was dipped in the sulfuric acid aqueous solution (2 mM) using the platinum wire as the counter electrode and it was oxidized electrochemically at the constant current of 0.2 mA. The carbon fibers were etched about 100 μm. Then it was standing at -0.7 volt for 20 minutes.

Similarly, the electrode of carbon fiber etched about 100 μm was made, using each bundle of one hundred fibers having diameter of 20 μm and 30 μm respectively.

Negative charge (-0.7v) was applied at this each electrode using the electrode of silver/silver chloride as the counter electrode in the solution of LB culture composition. The descending rate of oxygen reduction current was obtained after 24 hours. The result is shown in Table 2. This descending rate is small when the micro-hole is small.

### TABLE 2

| the diameter of carbon fiber (μm) | the descending rate of oxygen reduction current (%) |
|---|---|
| 5 | 10 |
| 7 | 15 |
| 20 | 35 |
| 30 | 50 |

Example 6

Each electrode was made by the same method as Example 4 except using phenol, 2,5-dimethyl phenol, 4,4'-diamino-diphenyl ether instead of aniline. Though it was left in LB culture composition at 37°C for 10 days, the descent of the value of the oxygen reduction current wasn't observed.

Example 7

The bundle of three thousand carbon fibers ("Torayca T-300", having the diameter of 7 μm) was put into the polyethylene tube (inside diameter was 2 mm) of 35 cm length, and one end of carbon fibers was fixed at outside of the tube. The epoxy resin (produced by Toray-Hysol Co. Ltd.,) containing hardening agent was poured from the inlet where the carbon fibers were fixed. This was post-cured on about 60°C for one hour and a half, then hardened carbon fiber composite material was pulled out from the tube, and cut into 10 cm length. Next, it was treated with heat by electric furnace. One end of this carbon fiber composite material was bonded to the lead wire by silver paste, and another end was burnished by means of conventional method after the side face was insulated completely by epoxy resin.

The part of carbon fibers were removed by anodic oxidation of this electrode in sulfuric acid aqueous solution (2 mM) using platinum plate as the counter electrode. The anodic oxidation was done at constant current 1 mA for 10 minutes and twenty minutes respectively. The depth of micro-hole was 90 μm at 10 minutes, and was 140 μm at 20 minutes. Negative charge (-0.6v) was applied at this electrode in a saline by using silver/silver chloride as the counter electrode, then the value of dissolved oxygen reduction current was measured. Thereafter the value of the current when the solution was stirred, devided by the current when it stopped was obtained. The values were 1.57, 1.34 respectively when anodic oxidation was done for 10 and 20 minutes.

Example 8

The composite material of carbon fiber and epoxy resin was made as similarly as Example 1 except that the number of fibers was three thousand. When this carbon fiber composite material was oxidized anodically at constant current (1 mA) in the sulfuric acid aqueous solution (2 mM) using platinum plate as the counter electrode, the carbon fibers were etched about 200 $\mu$m. Next, plating with platinum was done on the carbon fibers like Example 4 by the amount of 12 mC.

The temperature dependance of the value of oxygen reduction current at this electrode was less than 0.8 %/°C. This value was smaller than that of Clark oxygen sensor which was in the range of from 4 to 5 %/°C (Cf. "The optimum measuring and control of the fermentation process" Science Forum Page 214).

The end of this electrode was dipped in polyvinyl chloride (produced by Kanto Chemical Co. Ltd.,) 8 wt% solution (dimethylformamide), and it was left in methanol for 3 hours. Then after it was washed well by the deionized water, it was left in 20 cc of phosphate buffer solution (0.066M) containing glucose oxidase 5 mg (produced by Nagase Co. Ltd.,) for 10 hours. It was washed by deionized water, and -0.6v was applied (vs.SCE) in phosphate buffer solution (0.066M) using the saturated calomel electrode as reference electrode and platinum wire as the counter electrode. At this time, the relation-ship between the concentration of glucose and the decrease of oxygen reduction current was linear. It took sixty seconds for the current to become constant. The changed rate of the current by temperature change of the solution was 1.4%/°C.

When the potential( which was applied at this enzyme electrode) was changed to +0.6V (vs. SCE), the relation of the glucose concentration and oxidation current (current of hydrogen peroxide oxidization) was good linear relationship by our investigation.

Example 9

The carbon fiber composite material was made by same method as Example 8, and the carbon fibers were etched about 200 $\mu$m. And at once it was dipped in 20 cc of phosphate buffer solution (0.066M) containing the glucose oxidase 10 mg for 10 hours. It was washed well by deionized water, and the relation of the glucose concentration and the amount of the decrease of oxygen reduction current like Example 6 was a straight line passing zero point. The changed rate of current by temperature change of solution was 1 %/°C.

Example 10

The carbon fiber composite material was formed using the bundle of one thousand carbon fibers ("Torayca T-300", having the diameter of 7 $\mu$m) like Example 1.

This composite material was oxidized electrochemically at constant current (0.34mA) in the sulfuric acid aqueous solution (2 mM), and anodically etched about 200 $\mu$m.

A polymer membrane was electrochemically deposited at 1.5 volt (vs. SCE) for 10 minutes in acetonitrile solution containing 2,6-dimethylphenol (20mM) and sodium perchlorate (0.2M) using platinum wire as the counter electrode, and saturated calomel electrode as the reference electrode. The potential in various pH solution was investigated by using this electrode and good linear relationship with the inclination of -56 mV/pH was obtained. It responded in 1 minute when the electrode was removed from pH2 solution to pH10 solution.

Comparative Example 2

The constancy of potential was investigated by using the same pH electrode as Example 10 and the same one (except without micro-hole) in the phosphate buffer solution which includes the yeast extract essence (0.5 wt%), bactotrypton (0.3 wt%). As the result, the electrode with micro-hole gave the stable potential, but that of without micro-hole gave the potential slip, its error was 60 mV.

Example 11

The same electrode except that the depth of etching was 100 $\mu$m was formed. This electrode was plated with platinum by the amount of 4 mC as described in Example 4.

A polymer was electrochemically deposited on this electrode at 1.0 volt (vs. SCE) potential in the phosphate buffer solution( 2 M, pH=7) which contains 1,2-diamino benzene (20mM) for 10 minutes, using platinum wire as the counter electrode and saturated calomel electrode as the reference electrode. As by using this electrode the potential was investigated in solutions having various pH value, good linear relation having the inclination of -53 mV/pH was obtained during pH4 and pH9.

INDUSTRIAL APPLICABILITY

The minute electrode of this invention is useful for various electrode of electrochemical analysis, and it is suitable especially for the electrode for measuring the concentration of dissolved oxygen, for the concentration of ions, for bio sensor, or for the reference electrode.

## Claims

1. A micro-electrode for use in electrochemical analysis comprising a bundle of parallel carbon fibers set in a matrix of nonconducting resin, the electrode terminating in a working face formed transverse to the axis of the bundle, characterised in that the fibers are recessed from the face and communicate therewith through voids in the matrix which are coaxial with each fiber.

2. A micro-electrode according to claim 1 wherein the diameter of the carbon fibers is less than 20 $\mu$m.

3. A micro-electrode according to claim 1 wherein depth of the voids is from 0.5 to 500 $\mu$m.

4. A micro-electrode according to claim 1 wherein the nonconducting resin is selected from fluorinated resin, polyester resin, epoxy resin, polyphenylene oxide resin, polyphenylene sulfide resin, urethane resin, silicon resin, vinyl chloride resin and phenol resin.

5. A micro-electrode according to claim 1 wherein the recessed ends of the carbon fibers are covered with selective permeable membrane.

6. A micro-electrode according to claim 5 wherein the selective permeable membrane is an electropolymerized membrane.

7. A micro-electrode according to claim 6 wherein the electropolymerized membrane is substantially devoid of electroactivity for measuring the concentration of dissolved oxygen.

8. A micro-electrode according to claim 6 wherein the electropolymerized membrane is responsive to concentration of hydrogen ion.

9. A micro-electrode according to any preceding claim wherein enzymes and microorganisms are immobilized in the vicinity of the recessed carbon fiber ends.

10. A micro-electrode according to claim 1 wherein the recessed carbon fiber ends bear an undercoat of silver and a top coat of silver halide.

## Patentansprüche

1. Mikroelektrode zur Verwendung bei der elektrochemischen Analyse, die ein Bündel paralleler Kohlenstoffasern umfaßt, das in eine Matrix eines nichtleitenden Harzes eingesetzt ist, wobei diese Elektrode in einer Arbeitsfläche endet, die quer zur Achse des Bündels ausgebildet ist, dadurch gekennzeichnet, daß die Fasern von dieser Fläche ausgespart sind und mit dieser durch Hohlräume in der Matrix in Verbindung stehen, die mit jeder Faser koaxial verlaufen.

2. Mikroelektrode nach Anspruch 1, worin der Durchmesser der Kohlenstoffasern kleiner als 20 $\mu$m ist.

3. Mikroelektrode nach Anspruch 1, worin die Tiefe der Hohlräume von 0,5 bis 500 $\mu$m beträgt.

4. Mikroelektrode nach Anspruch 1, worin das nichtleitende Harz aus fluoriertem Harz, Polyesterharz, Epoxyharz, Polyphenylenoxidharz, Polyphenylensulfidharz, Urethanharz, Siliconharz, Vinylchloridharz und Phenolharz ausgewählt ist.

5. Mikroelektrode nach Anspruch 1, worin die ausgesparten Enden der Kohlenstoffasern mit einer selektiven permeablen Membran bedeckt sind.

6. Mikroelektrode nach Anspruch 5, worin diese selektive permeable Membran eine elektropolymerisierte Membran ist.

7. Mikroelektrode nach Anspruch 6, worin diese elektropolymerisierte Membran im wesentlichen ohne elektrische Aktivität ist, um die Konzentration des gelösten Sauerstoffes zu messen.

8. Mikroelektrode nach Anspruch 6, worin die elektropolymerisierte Membran auf die Konzentration des Wasserstoffions anspricht.

9. Mikroelektrode nach einem der vorstehenden Ansprüche, worin Enzyme und Mikroorganismen in der Nähe der ausgesparten Kohlenstoffaserenden unbeweglich sind.

10. Mikroelektrode nach Anspruch 1, worin die ausgesparten Kohlenstoffaserenden eine Unterschicht aus Silber und eine Oberschicht aus Silberhalogenid tragen.

**Revendications**

1. Micro-électrode pour l'utilisation dans l'analyse électrochimique, comprenant un faisceau de fibres de carbone parallèle placé dans une matrice de résine non conductrice, l'électrode se terminant par une face de travail formée transversalement à l'axe du faisceau, caractérisée en ce que les fibres sont en retrait par rapport à la face et communiquent avec celle-ci par des vides dans la matrice qui sont coaxiaux à chaque fibre.

2. Micro-électrode selon la revendication 1, dans laquelle le diamètre des fibres de carbone est inférieur à 20 μm.

3. Micro-électrode selon la revendication 1, dans laquelle la profondeur des vides est de 0,5 à 500 μm.

4. Micro-électrode selon la revendication 1, dans laquelle la résine non conductrice est choisie parmi une résine fluorée, une résine de polyester, une résine époxy, une résine de poly(oxyde de phénylène), une résine de poly(sulfure de phénylène), une résine d'uréthane, une résine de silicone, une résine de chlorure de vinyle et une résine phénolique.

5. Micro-électrode selon la revendication 1, dans laquelle les extrémités en retrait des fibres de carbone sont recouvertes d'une membrane perméable sélective.

6. Micro-électrode selon la revendication 5, dans laquelle la membrane perméable sélective est une membrane électro-polymérisée.

7. Micro-électrode selon la revendication 6, dans laquelle la membrane électropolymérisée est pratiquement dépourvue d'électro-activité pour mesurer la concentration de l'oxygène dissous.

8. Micro-électrode selon la revendication 6, dans laquelle la membrane électropolymérisée répond à la concentration de l'ion hydrogène.

9. Micro-électrode selon l'une quelconque des revendications précédentes, dans laquelle des enzymes et des microorganismes sont immobilisés au voisinage des extrémités des fibres de carbone en retrait.

10. Micro-électrode selon la revendication 1, dans laquelle les extrémités des fibres de carbone en retrait portent une sous-couche d'argent et une couche supérieure d'halogénure d'argent.

FIG. 1

FIG. 2

FIG. 3